# EUROPÄISCHE PATENTSCHRIFT

(11) **EP 0 820 911 B1**
(45) Veröffentlichungstag und Bekanntmachung des Hinweises auf die Patenterteilung: **13.11.2002**
(21) Anmeldenummer: 97111090.3
(22) Anmeldetag: 03.07.1997
(51) Int. Cl.: B60S 1/52, B60S 1/60, B60S 1/48

(54) **Scheinwerfer-Reinigungseinrichtung**
Headlight cleaning device
Dispositif de nettoyage de phare

(30) Priorität: 27.07.1996 DE 19630421
(43) Veröffentlichungstag der Anmeldung: 28.01.1998
(60) Teilanmeldung: 00102361.3
(73) Patentinhaber: Siemens Aktiengesellschaft, 80333 München (DE)
(72) Erfinder: Petzold, Sven, 65191 Wiesbaden (DE); Bandemer, Joachim, 61130 Nidderau (DE)

(56) Entgegenhaltungen:
- EP-A- 0 508 853
- DE-C- 4 203 380
- DE-U- 8 613 734
- FR-A- 2 673 154
- GB-A- 2 026 851
- PATENT ABSTRACTS OF JAPAN vol. 007, no. 016 (M-187), 22.Januar 1983 & JP 57 172857 A (NIPPON DENSO KK), 23.Oktober 1982,
- PATENT ABSTRACTS OF JAPAN vol. 095, no. 011, 26.Dezember 1995 & JP 07 196016 A (SUZUKI MOTOR CORP), 1.August 1995,

## Beschreibung

Die Erfindung betrifft eine Scheinwerfer-Reinigungseinrichtung für Fahrzeuge gemäß den Merkmalen des Oberbegriffes des unabhängigen Patentanspruchs.

Eine solche Scheinwerfer-Reinigungseinrichtung für Fahrzeuge ist aus der DE-A-24 55 294 bekannt. Bei dieser Anlage ist eine Düse vorhanden, die in einer Ruhestellung und in eine Arbeitsstellung bewegbar ist. Diese Bewegung wird bewirkt von einer Stelleinrichtung, die über einen Hebel ein in einer Führung gelagertes Rohr antreibt. Diese Reinigungsanlage ist konstruktiv aufwendig, da sie viele Einzelkomponenten beinhaltet und benötigt einen hohen Bauraum, der insbesondere in dem Frontbereich des Fahrzeuges, in dem üblicherweise die Scheinwerfer angeordnet sind, nicht zur Verfügung steht. Darüber hinaus ist es von Nachteil, dass die Reinigungsanlage Verschmutzungen unterworfen ist, wodurch es zu einer Beeinträchtigung der Funktionsweise kommen kann. Ein weiterer Nachteil ist darin zu sehen, dass die Bewegung der Stelleinrichtung übersetzt auf das Rohr wirkt, so dass dann, wenn die Düse in ihrer Ruhestellung festgefroren oder verschmutzt ist, die Bewegung in die Arbeitsstellung erschwert wird oder sogar nicht möglich ist.

Es ist weiterhin eine Reinigungsvorrichtung bekannt, bei der eine Düse von einem Träger in eine Arbeitsposition bewegt wird (DE-C-42 03 380). Die Düse ist zum Zuführen von Waschflüssigkeit mit einem Schlauch verbunden, der von dem Träger geführt wird. Der Träger besteht aus einer Vielzahl von beweglichen Teilen. Neben dem komplizierten Aufbau besitzt der Träger den weiteren Nachteil, dass Schmutzpartikel zwischen die beweglichen Teile gelangen können. Dort können diese Partikel zum Blockieren der beweglichen Teile oder zur Beschädigung des Schlauches führen.

Der Erfindung liegt daher die Aufgabe zugrunde, eine Scheinwerfer - Reinigungseinrichtung derart auszugestalten, dass die genannten Nachteile vermieden werden.

Diese Aufgabe ist dadurch gelöst, daß die Stelleinrichtung, bei der es sich insbesondere um eine pneumatische oder hydropneumatische Stelleinrichtung oder um den an sich bekannten Elektromotor handelt, den Träger, insbesondere das Rohr, untersetzt antreibt. Dadurch sind die Vorteile gegeben, daß die Reinigungseinrichtung kompakt baut und in jeder Betriebssituation von der Ruhestellung in die Arbeitsstellung und umgekehrt bewegbar ist. Durch eine entsprechende konstruktive Ausgestaltung der Untersetzung ist es weiterhin möglich, das die Düse tragende Rohr und den Elektromotor nah beieinander benachbart anzuordnen, was die Kompaktheit unterstützt. Während durch den Träger Reinigungsflüssigkeit zu der Düse gefördert wird, kann der Träger eine Linearbewegung (Ein-/Ausfahren) und/oder eine Drehbewegung ausführen (kreisbogenartige Hin- und Herbewegung über eine Streuscheibe eines Scheinwerfers). Denkbar ist auch, der Düse separat über einen Schlauch oder dergleichen die Reinigungsflüssigkeit zuzuführen.

In Weiterbildung der Erfindung ist der Elektromotor in einem Gehäuse angeordnet, wobei das Rohr das Gehäuse wenigstens einmal durchdringt. Aufgrund dieser Ausgestaltung kann die Reinigungseinrichtung als kompakte Baueinheit vorgefertigt werden und ermöglicht somit eine vereinfachte Montage. In besonders vorteilhafter Ausgestaltung durchdringt das Rohr das Gehäuse zweimal, wobei diese Durchdringung dann als Führung für das Rohr ausgebildet ist. Diese Durchdringung (bzw. Durchdringungen) dient neben der Führung des Rohres bei einer glattwandigen Ausgestaltung des Rohres auch als Abdichtung gegenüber äußeren Einflüssen. Eine separate Führung des Trägers (Rohres) ist auch denkbar.

In Weiterbildung der Erfindung besteht das Gehäuse aus zwei Halbschalen, wobei diese Halbschalen symmetrisch ausgebildet sind. Diese Ausgestaltung hat den Vorteil, daß eine einfache Montage möglich ist. Die Verbindung der beiden Halbschalen untereinander kann, gegebenenfalls unter Einlegung einer Dichtung, in an sich bekannter Weise durch Verschraubung, Verklebung, Zuschnappen oder dergleichen erfolgen. Dabei sind in an sich geeigneter Weise Leitungen zumindest für den Elektromotor aus dem Gehäuse herausgeführt.

In Weiterbildung der Erfindung ist das Rohr symmetrisch ausgebildet. Dies hat ebenfalls den Vorteil einer einfachen Montage, da nicht darauf geachtet werden muß, an welchem Ende des Rohres die Düse und an welchem Ende der Zuführschlauch für die Reinigungsflüssigkeit angeschlossen werden muß. Zu diesem Zweck ist gegebenenfalls zumindest die Düse an die Rohrgeometrie im Endbereich anzupassen. Alternativ dazu ist es auch denkbar, ein Rohrende speziell für den Anschluß einer Düse und das andere Rohrende speziell für den Anschluß eines Schlauches oder dergleichen auszugestalten. Auch kann insbesondere in dem Bereich, in dem der Schlauch angeschlossen wird, das Rohr einen Anschlag aufweisen, der in einer Stellung, vorzugsweise in der Arbeitsstellung an einem weiteren Anschlag, insbesondere an einem Gehäuseanschlag, anliegt.

Nach der Erfindung ist zwischen dem Elektromotor und dem Rohr ein Untersetzungsgetriebe angeordnet. Dies hat neben dem schon erwähnten Vorteil der Kompaktheit auch noch den Vorteil, daß das Rohr und damit die Düse immer zuverlässig von der Ruhestellung in die Arbeitsstellung und umgekehrt (mittels Linear- und/oder Drehbewegung) bewegbar ist, auch dann, wenn beispielsweise durch Vereisung oder Verschmutzung eine Schwergängigkeit vorhanden ist. Ein weiterer Vorteil liegt darin, daß bei einem selbsthemmenden Untersetzungsgetriebe das Rohr sowohl zumindest in der Ruhestellung arretiert ist, ohne daß der Elektromotor bestromt werden muß. Die Endpositionen Ruhestellung und Arbeitsstellung werden beispielsweise dadurch detektiert, daß die Stromaufnahme des Elektromotors gemessen wird. Läuft der Elektromotor bzw. das Rohr gegen einen Anschlag, steigt die Stromaufnahme überproportional an, wobei dieser Effekt gemessen, ausgewertet und zum Abschalten oder Umpolen des Elektromotors herangezogen werden kann. Daneben ist es auch denkbar, Endschalter zu verwenden, die beispielsweise von den Anschlägen betätigt werden. Vorzugsweise sind diese Endschalter innerhalb des Gehäuses anzuordnen.

In Weiterbildung der Erfindung ist im Durchflußbereich des Rohres oder der Düse ein druckabhängig arbeitendes Ventil angeordnet. Dies hat den Vorteil, daß von der Düse erst dann Reinigungsflüssigkeit abgegeben (gespritzt) wird, wenn ein vorgebbarer Druck aufgebaut wurde, der das Ventil überwindet. Damit ist sichergestellt, daß nur Reinigungsflüssigkeit mit einem solchen Druck auf die Scheinwerfer (Streuscheiben) gespritzt wird, der für eine zuverlässige Reinigung erforderlich ist.

In Weiterbildung der Erfindung weist zumindest der freiliegende Teil des Rohres in seiner Arbeitsstellung und/oder seiner Ruhestellung eine Schutzabdeckung, insbesondere einen Faltenbalg, auf. Dies hat den Vorteil, daß der Bereich, in dem sich der Antrieb durch die Stelleinrichtung befindet und der durch die Führung geführt ist, vor Verschmutzungen und damit vor einem erhöhten Verschleiß geschützt ist. Als besonders einfache Ausgestaltung einer solchen Schutzabdeckung kommt ein Faltenbalg in Betracht, wobei auch andere Ausgestaltungen denkbar sind. Je nach Dimensionierung der Schutzabdeckung kann diese die Bewegung des Rohres aufgrund ihrer Federkraft unterstützen.

In Weiterbildung der Erfindung ist die Stelleinrichtung in der Arbeitsstellung der Düse zumindest zeitweise mit Energie beaufschlagbar. Das heißt beispielsweise, daß der Elektromotor nach der Linearbewegung des Rohres von der Ruhestellung in die Arbeitsstellung weiterhin bestromt wird, um somit neben der Anlage des Rohres an dem einen Anschlag eine zusätzliche Stabilität zu schaffen. Denkbar ist es, den Elektromotor nur dann zu bestromen, wenn auch Reinigungsflüssigkeit über die Düse abgegeben wird oder während der gesamten Dauer, während der sich das Rohr in der Arbeitsstellung befindet, zu bestromen.

Ein Verfahren zum Betreiben einer Scheinwerfer-Reinigungseinrichtung, das im vorliegenden Patent nicht beansprucht wird, bei dem die Düse in der Arbeitsstellung zumindest zeitweise Reinigungsflüssigkeit abgibt, sieht vor, daß die Düse auch während der Bewegung von der Ruhestellung in die Arbeitsstellung und/oder umgekehrt Reinigungsflüssigkeit abgibt. Dadurch kann beispielsweise bei einer Linearbewegung beim Ausfahren der Düse schon Reinigungsflüssigkeit auf die Streuscheibe gespritzt werden, dort den Schmutz anlösen, der dann von der abgespritzten Reinigungsflüssigkeit in der Arbeitsstellung der Düse weitestgehend vollständig beseitigt wird. Alternativ dazu ist denkbar, daß in der Arbeitsstellung der Düse Reinigungsflüssigkeit auf die Streuscheibe gespritzt wird, die dann den Schmutz anlöst, der dann von einer Menge an Reinigungsflüssigkeit, die beim Einfahren der Düse in die Ruhestellung abgegeben wird, beseitigt wird. Dies hat den Vorteil, daß auch schon das Ausfahren und/oder das Einfahren der Düse für den Reinigungsvorgang genutzt wird. Je nach Geometrie der Streuscheibe, der Bewegungsbahn (z. B. eine Bewegung analog der eines Scheibenwischers) der Düse von ihrer Ruhestellung in die Arbeitsstellung und zurück und der Strahlcharakteristik der Düse ist es denkbar, daß die Düse nur kurze Zeit in ihrer Arbeitsstellung verharrt oder sofort nach Erreichen dieser wieder zurückgefahren, also bei einer Linearbewegung eingefahren wird.

Konkrete Ausgestaltungsformen der Scheinwerfer-Reinigungseinrichtung sowie die Arbeitsweise des nicht beanspruchten Verfahrens zum Betreiben der Scheinwerfer-Reinigungseinrichtung ist im Folgenden erläutert und in den Figuren gezeigt.

Es zeigen:
- Fig. 1:: Eine Scheinwerfer-Reinigungseinrichtung im ausgefahrenen Zustand,
- Fig. 2:: eine weitere Ausgestaltung einer Scheinwerfer-Reinigungseinrichtung,
- Fig. 3:: einen Schnitt B - B durch die Ausgestaltung gemäß Fig. 2,
- Fig. 4:: ein Zeitliniendiagramm,
- Fig. 5:: eine Steuereinrichtung.

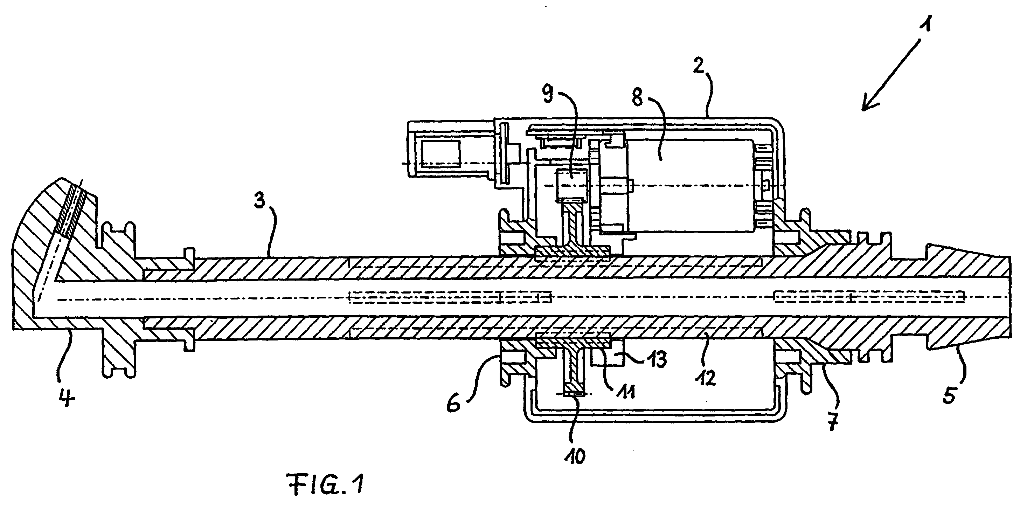

Fig. 1 zeigt eine Scheinwerfer-Reinigungseinrichtung im ausgefahrenen Zustand mit ihren wesentlichen Komponenten, die mit denen auch das erfindungsgemäße Verfahren realisiert werden kann.

Bei den wesentlichen Komponenten einer Scheinwerfer-Reinigungseinrichtung 1 handelt es sich um ein Gehäuse 2, wobei das Gehäuse 2 von einem Rohr 3 durchsetzt wird. An dem einen Ende des Rohres 3 (im Bereich des nicht gezeigten Scheinwerfers, in dessen Gehäuse auch die Scheinwerfer-Reinigungsenrichtung integiert werden kann) ist eine Düse 4 angeordnet, die beliebiger Bauart (z. B. eine sogenannte Fluidics-Düse mit dem Vorteil des gegenüber herkömmlichen Düsen geringeren Verbrauches an Reinigungsflüssigkeit) sein kann. Diese Düse 4 kann ein eigenständiges Bauteil sein, denkbar ist es auch, daß das Rohr 3 und die Düse 4 eine Baueinheit bilden oder einstückig ausgeführt sind. An dem der Düse 4 abgewandten Ende des Rohres 3 ist ein Anschlußstück 5 für einen Zufuhrschlauch für Reinigungsflüssigkeit vorhanden, wobei das An-schlußstück in an sich bekannter Weise ein Widerlager für den Zufuhrschlauch aufweist, um ein Abspringen zu verhindern. In dem Gehäuse 2 sind ein An-schlag 6 (für die Düse 4) sowie ein Anschlag 7 (für das Anschlußstück 5) inte-griert, wobei diese Anschläge 6 und 7 die Führung bzw. eine Abdichtung eines glattwandigen Rohres 3 gegenüber dem Gehäuse 2 übernehmen. Im Bereich des Anschlages 7 ist beispielsweise eine konische Ausbildung gezeigt, während im Bereich des Anschlages 6 entsprechende an der Düse 4 ange-ordnete Anschlagflächen anliegen können. Die konische Ausbildung hat den Vorteil, daß dadurch das Rohr 3 in der ausgefahrenen Stellung stabilisiert wird.

In dem Gehäuse 2 ist ein Elektromotor 8 angeordnet, der auf seiner nicht näher bezeichneten Motorwelle ein Ritzel 9 trägt. Dieses Ritzel 9 steht in Kämmeingriff mit einem Stirnrad 10, wobei das Stirnrad 10 auf seinem dem Rohr 3 zugeordneten Innenumfang als Schneckenrad 11 ausgestaltet ist. Dieses Schneckenrad 11 wiederum steht in Kämmeingriff mit einer Schnecke 12, deren Schneckengänge über eine solche Teillänge des Rohres 3 angeordnet sind, um das Rohr 3 und damit die Düse 4 von der Ruhestellung in die Arbeitsstellung, die in dieser Figur gezeigt ist, linear zu bewegen. In vorteilhafter Weise ist das Schneckenrad 11 (bzw. das eine Baueinheit bildende Stirnrad 10) geführt, wobei diese Führung einerseits von einem Teil des Anschlages 6 und andererseits von einer separaten Führung 13 übernommen wird. Darüber hinaus ist es denkbar, daß Gehäuse 2 im Bereich des Rohres 3 derart auszugestalten, daß die Führung für das Rohr 3 und Schneckenrad 11 von den beiden Anschlägen 6 und 7 übernommen wird.

Als weitere Ausführungsformen kommen in Betracht, daß an dem Rohr 3 eine Zahnstange angeordnet oder integriert ist, die von dem Elektromotor 8, gegebenenfalls unter Zwischenschaltung weiterer Zahnräder, die eine Untersetzung bilden, angetrieben wird. Es ist auch denkbar, daß der Elektromotor 8 ein Reibrad antreibt, das auf ein glattwandiges Rohr wirkt. Darüber hinaus kann entlang des Rohres 3 (beispielsweise in Form einer Ummantelung) oder in dem Rohr 3 integriert eine Heizung (beispielsweise in Form von Widerstandsdrähten) integriert sein. Diese Widerstandsheizung kann unterhalb einer vorgebbaren Temperaturschwelle ständig betrieben werden, wobei es auch denkbar ist, diese Widerstandsheizung erst mit Betätigung des Elektromotors einzuschalten. Ebenso wird in vorteilhafter Weise eine druckerzeugende Einrichtung (Fördereinrichtung), die die Reinigungsflüssigkeit durch das Rohr 3 und durch die Düse 4 auf den Scheinwerfer fördert, erst dann eingeschaltet, wenn das Rohr 3 und damit die Düse 4 in ihrer Arbeitsstellung sind. Es ist nicht zwangsweise erforderlich, daß das Rohr 3 in seinem der Düse 4 zugewandten Bereich gerade ausgebildet ist, sondern hier sind Verdickungen, Verjüngungen oder andere geometrische Ausführungsformen (z. B. Bogenform) denkbar, um den Düsenbereich den Außenkonturen des Fahrzeuges im Scheinwerferbereich anpassen zu können.

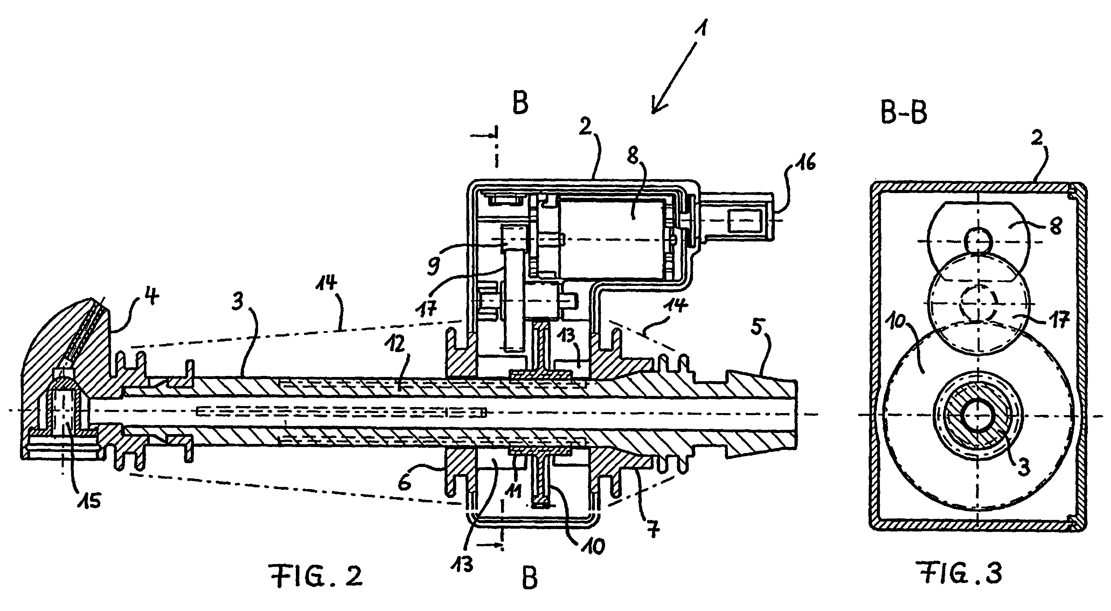

Fig. 2 zeigt eine weitere Ausgestaltung einer Scheinwerfer-Reinigungseinrichtung. Neben den schon in Fig. 1 gezeigten und beschriebenen Komponenten ist bei der Scheinwerfer-Reinigungseinrichtung 1 gemäß Fig. 2 zwischen dem Gehäuse 2 (insbesondere dem Anschlag 6) und der Düse 4 (bzw. dem der Düse 4 zugewandten Ende des Rohres 3) eine Schutzabdeckung in Form eines schematisch dargestellten Faltenbalges 14 angeordnet, der den freien Bereich des Rohres 3, insbesondere den Bereich der Schnecke 12, vor Verschmutzungen und damit vor Verschleiß schützt. Weiterhin ist zwischen dem Anschlag 7 und dem Anschlußstück 5 ebenfalls ein Faltenbalg 14 angeordnet, der in der in Fig. 2 gezeigten Arbeitsstellung eingefahren ist.

Weiterhin ist in Fig. 2 gezeigt, daß in der Düse 4 ein Ventil 15 angeordnet ist, das druckabhängig wirkt, so daß Reinigungsflüssigkeit von der Düse 4 erst mit einem vorgebbaren Druck abgespritzt wird. Denkbar ist es, das Ventil 15 auch im Bereich des Rohres 3 oder auch in einem Bereich hinter einer nicht gezeigten Fördereinrichtung für Reinigungsflüssigkeit und dem Rohr 3 anzuordnen.

Mit der Bezugsziffer 16 ist ein elektrischer Anschluß bezeichnet, der die Zuführleitungen für die Stromversorgung des Elektromotors 8 und gegebenenfalls weitere Leitungen (beispielsweise für nicht gezeigte Endschalter) durch das Gehäuse 2 führt. Dieser elektrische Anschluß 16 ist insbesondere staub- und wasserdicht.

In Ergänzung zu Fig. 1 ist noch in Fig. 2 gezeigt, daß das Untersetzungsgetriebe eine weitere Untersetzungsstufe in Form eines Zahnrades 17 aufweist, wobei der größere Zahnkranz des Zahnrades 17 das Ritzel 9 kämmt und der kleinere Zahnkranz des Zahnrades 17 das Stirnrad 10 kämmt.

Fig. 3 zeigt einen Schnitt B - B durch die Ausgestaltung gemäß Fig. 2, wobei ein zweiteiliges Gehäuse 2, der Elektromotor 8, das Zahnrad 17, das Stirnrad 10 sowie das Rohr 3 mit dem Schneckengang 12 gezeigt ist.

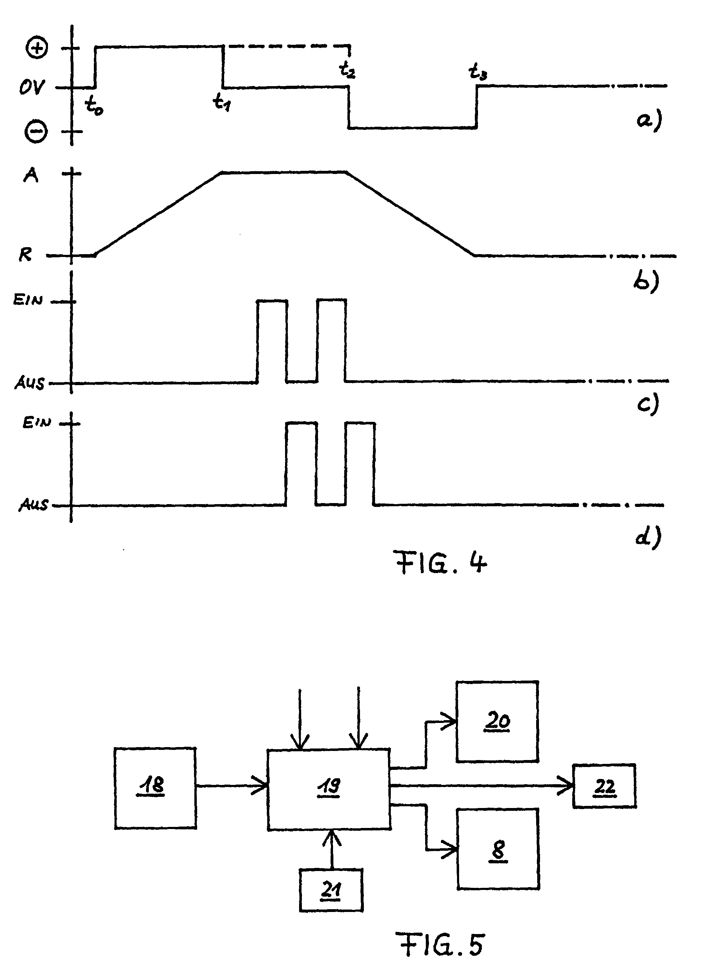

Fig. 4 zeigt ein Zeitliniendiagramm, wobei in Fig. 4a eine beispielhafte Ansteuerung für den Elektromotor 8 zum Erreichen einer Linearbewegung gezeigt ist. Zu einem beliebigen Zeitpunkt t₀ erhält der Elektromotor 8 einen Ansteuerimpuls, so daß er, wie in Fig. 4b gezeigt ist, die Düse 4 von ihrer Ruhestellung R in ihre Arbeitsstellung A ausfährt. Ist die Arbeitsstellung A zu einem Zeipunkt t₁ erreicht, was beispielsweise nach Zeitablauf (t₀ bis t₁) der Fall ist oder durch Endschalter oder die Stromaufnahme des Elektromotors 8 detektiert werden kann, wird eine Fördereinrichtung zur Versorgung der Düse 4 mit Reinigungsflüssigkeit oder ein Ventil, über das eine unter Druck stehende Reinigungsflüssigkeit zurückgehalten wird, eingeschaltet bzw. angesteuert, wie das in Fig. 4c gezeigt ist. Dies geschieht während der gesamten Dauer, in der sich die Düse 4 in ihrer Arbeitsstellung befindet oder zumindest zeitweise (getaktet) während dieser Zeitdauer. Ist nach Zeitablauf der Zeitpunkt t₂ erreicht, wird der Elektromotor 8 umgepolt angesteuert, so daß er die Düse 4 von ihrer Arbeitsstellung A in ihre Ruhestellung R zurückbewegt. Dabei wird wie schon beim Ausfahren vorgegangen, so daß die Düse 4 zum Zeitpunkt t₃ ihre Ruhestellung R wieder eingenommen hat. Gemäß dem Verfahren ist es denkbar, die Fördereinrichtung bzw. das Ventil nicht nur während der Zeit t₁ bis t₂, während der sich die Düse in ihrer Arbeitstellung befindet, anzusteuern, sondern auch während der Zeitspanne t₀ bis t₁ und/oder während der Zeitspanne t₂ bis t₃, so daß die Düse auch während der Bewegung von der Ruhestellung R in die Arbeitsstellung A und/oder Reinigungsflüssigkeit abgibt. In diesen Zeiträumen kann die Düse 4 einmal, mehrmals oder auch kontinuierlich Reinigungsflüssigkeit abgeben. Auch die Abgabe von Reinigungsflüssigkeit um den Zeitpunkt t₁ und/oder t₂ herum ist denkbar. So ist eine bevorzugte Ansteuerung derart vorgesehen, daß die Düse 4 innerhalb des Zeitraumes t₁ bis t₂, in der sie sich in ihrer Arbeitsstellung A befindet einmal Reinigungsflüssigkeit abgibt und, um eine Anlösung von Verschmutzungen zu bewirken und dann beim Einfahren ein weiteres Mal Reinigungsflüssigkeit abgibt, um die angelösten Verschmutzungen wegzuspritzen, wie dies in Fig. 4d gezeigt ist.

Fig. 5 zeigt ein Steuersystem, das mit dem Verfahren betrieben werden kann. Ein Steuerschalter 18, mit dem die Reinigung der Scheinwerfer bzw. deren Streuscheiben manuell oder automatisch ausgelöst werden soll, ist an einer Steuereinrichtung 19 angeschlossen, die beispielsweise eine Fördereinrichtung für Reinigungsflüssigkeit in Form einer Pumpe 20 ansteuert. Weiterhin steuert die Steuereinrichtung 19 auch den Elektromotor 8 an, und zwar in der Weise, wie dies gemäß dem Verfahren, wie es beispielhaft in Fig. 4 gezeigt ist, erfolgen soll. Dabei steuert die Steuereinrichtung 19 beispielsweise die Zeitspannen t₀ bis t₁, t₁ bis t₂ sowie t₂ bis t₃ durch Zeitablauf, durch Erfassung und Auswertung des von dem Elektromotor 8 aufgenommenen Stromes, mittels Endschalter, die die Endpositionen des Rohres 3 erfassen und dereren Ausgangssignale der Steuereinrichtung 19 zugeführt werden, oder gleichwertige und gleichwirkende Vorgehensweisen. Die Steuereinrichtung 19 ist auch in der Lage, während der Zeit, während der sich die Düse 4 in ihrer Arbeitsstellung befindet, den Elektromotor 8 weiter zu bestromen, um eine höhrere Stabilität zu erreichen (dies ist in Fig. 4a duch die gestrichelte Linie im Bereich t₁ bis t₂ gezeigt). Weiterhin ist noch in Fig. 5 gezeigt, daß die Steuereinrichtung 19 mit einem Temperatursensor 21 verschaltet ist, wobei bei Unterschreitung einer vorgebbaren Temperaturschwelle eine Heizung 22 des Rohres 3 und/oder der Düse 4 eingeschaltet werden kann.

Die Erfindung ist nicht auf eine einzige Düse zur Reinigung eines einzigen Scheinwerfers beschränkt. So ist in einer Weiterbildung der Erfindung weiterhin vorgesehen, daß bei mehreren Düsen, insbesondere bei zwei Düsen, je eine Düse von einer Fördereinrichtung (Pumpe 20) und/oder über ein Ventil (beispielsweise Magnetventil, nicht gezeigt) mit Reinigungsflüssigkeit versorgt wird. Alternativ dazu ist es möglich, daß bei mehreren Düsen zumindest zwei Düsen, gegebenenfalls unter Zwischenschaltung je eines einer Düse zugeordneten Ventiles, von einer einzigen Fördereinrichtung versorgt wird. Je nach Ausgestaltung der Fördereinrichtung (beispielsweise Dualpumpe) wird zunächst die eine Düse und darauf folgend die andere Düse mit Reinigungsflüssigkeit versorgt, so daß die Scheinwerfer nacheinander gereinigt werden. Zu diesem Zweck ist dann die Steuereinrichtung 19 entsprechend ausgestaltet, so daß die Pumpe 20 während des Reinigungsvorganges beider Scheinwerfer eingeschaltet ist und nacheinander die zwei dann vorhandenen Elektromotoren 8 angesteuert werden. Es ist auch denkbar, daß die mehreren Düsen mit der gleichen oder einer unterschiedlichen Menge an Reinigungsflüssigkeit versorgt werden oder daß die Steuereinrichtung 19 den Reinigungsvorgang einer Streuscheibe bei mehreren Streuscheiben gleich oder unterschiedlich lang voneinander steuert.

## Patentansprüche

1. Scheinwerfer-Reinigungseinrichtung (1) für Fahrzeuge mit zumindest einer im oder am Fahrzeug in Ruhestellung bringbaren, insbesondere versenkbaren und in eine Arbeitsstellung mittels einer Stelleinrichtung bewegbaren Düse (4), wobei ein als Rohr (3) ausgebildeter und die Düse (4) aufnehmender Träger durch eine Stelleinrichtung antreibbar ist, **dadurch gekennzeichnet, dass** die Stelleinrichtung, insbesondere Elektromotor (8), mit dem Träger (3) über ein Untersetzungsgetriebe verbunden ist und dass der Träger (3) Bestandteil der Reinigungsflüssigkeitsleitung ist.

2. Scheinwerfer-Reinigungseinrichtung (1) nach Anspruch 1, **dadurch gekennzeichnet, dass** der Elektromotor (8) in einem Gehäuse (2) angeordnet ist, wobei das Rohr (3) das Gehäuse (2) wenigstens einmal durchdringt.

3. Scheinwerfer-Reinigungseinrichtung (1) nach Anspruch 2, **dadurch gekennzeichnet, dass** diese Durchdringung als Führung für das Rohr (3) ausgebildet ist.

4. Scheinwerfer-Reinigungseinrichtung (1) nach Anspruch 2 oder 3, **dadurch gekennzeichnet, dass** das Gehäuse (2) aus zwei, insbesondere symmetrischen Halbschalen besteht.

5. Scheinwerfer-Reinigungseinrichtung (1) nach einem der vorhergehenden Ansprüche, **dadurch gekennzeichnet, dass** das Rohr (3) in den Endbereichen symmetrisch ausgebildet ist.

6. Scheinwerfer-Reinigungseinrichtung (1) nach einem der vorhergehenden Ansprüche, **dadurch gekennzeichnet, dass** das Gehäuse (2) zumindest einen Anschlag für eine Endstellung der Düse (4), insbesondere einen Anschlag (6) für die Ruhestellung und einen Anschlag (7) für die Arbeitsstellung der Düse (4) aufweist.

7. Scheinwerfer-Reinigungseinrichtung (1) nach einem der vorhergehenden Ansprüche, **dadurch gekennzeichnet, dass** das Rohr (3) zumindest über eine Teillänge einer Schnecke (12) aufweist, die sich in Eingriff mit einem von dem Elektromotor (8) antreibbaren Schneckenrad (11) befindet.

8. Scheinwerfer-Reinigungseinrichtung (1) nach einem der vorhergehenden Ansprüche, **dadurch gekennzeichnet, dass** im Durchflußbereich des Rohres (3) oder der Düse (4) ein druckabhängig arbeitendes Ventil (15) angeordnet ist.

9. Scheinwerfer-Reinigungseinrichtung (1) nach einem der vorhergehenden Ansprüche, **dadurch gekennzeichnet, dass** zumindest der freiliegende Teil des Rohres (3) in seiner Arbeitsstellung und/oder Ruhestellung eine Schutzabdeckung, insbesondere einen Faltenbalg (14) aufweist.

10. Scheinwerfer-Reinigungseinrichtung (1) nach einem der vorhergehenden Ansprüche, **dadurch gekennzeichnet, dass** die Stelleinrichtung in der Arbeitsstellung der Düse (4) zumindest zeitweise mit Energie beaufschlagbar ist.

## Claims

1. Headlight cleaning device (1) for vehicles having at least one nozzle (4) which can be brought into a rest position in or on the vehicle, in particular can be lowered and can be moved into a working position by means of an adjusting device, a support which is designed as a pipe (3) and accommodates the nozzle (4) being driveable by an adjusting device, **characterized in that** the adjusting device, preferably an electric motor (8), is connected to the support (3) via a step-down gear, and **in that** the support (3) is part of the cleaning fluid line.

2. Headlight cleaning device (1) according to Claim 1, **characterized in that** the electric motor (8) is arranged in a housing (2), the pipe (3) penetrating the housing (2) at least once.

3. Headlight cleaning device (1) according to Claim 2, **characterized in that** this penetration is designed as a guide for the pipe (3).

4. Headlight cleaning device (1) according to Claim 2 or 3, **characterized in that** the housing (2) comprises two, preferably symmetrical half-shells.

5. Headlight cleaning device (1) according to one of the preceding claims, **characterized in that** the pipe (3) is of symmetrical design in the end regions.

6. Headlight cleaning device (1) according to one of the preceding claims, **characterized in that** the housing (2) has at least one stop for an end position of the nozzle (4), preferably a stop (6) for the rest position and a stop (7) for the working position of the nozzle (4).

7. Headlight cleaning device (1) according to one of the preceding claims, **characterized in that** the pipe (3) has, at least over a sublength of a worm (12) which is in engagement with a worm wheel (11) which can be driven by the electric motor (8).

8. Headlight cleaning device (1) according to one of the preceding claims, **characterized in that** a valve (15) operating as a function of pressure is arranged in the flow-through region of the pipe (3) or the nozzle (4).

9. Headlight cleaning device (1) according to one of the preceding claims, **characterized in that** at least the exposed part of the pipe (3) has a protective covering, preferably a bellows (14), in its working position and/or rest position.

10. Headlight cleaning device (1) according to one of the preceding claims, **characterized in that** energy can be applied at least temporarily to the adjusting device in the working position of the nozzle (4).

## Revendications

1. Dispositif de nettoyage de phare (1) pour véhicules, comprenant au moins un gicleur (4) pouvant être amené, en particulier rentré, dans une position de repos dans ou sur le véhicule, et déplacé dans une position de travail au moyen d'un dispositif de réglage, un support réalisé sous la forme d'un tuyau (2) et recevant le gicleur (4) pouvant être entraîné par un dispositif de réglage, **caractérisé en ce que** le dispositif de réglage, en particulier un moteur électrique (8), est connecté au support (3) par un démultiplicateur et **en ce que** le support (3) fait partie de la conduite de liquide de nettoyage.

2. Dispositif de nettoyage de phare (1) selon la revendication 1, **caractérisé en ce que** le moteur électrique (8) est disposé dans un boîtier (2), le tuyau (3) traversant le boîtier (2) au moins une fois à travers un passage.

3. Dispositif de nettoyage de phare (1) selon la revendication 2, **caractérisé en ce que** ce passage est réalisé en tant que guidage pour le tuyau (3).

4. Dispositif de nettoyage de phare (1) selon la revendication 2 ou 3, **caractérisé en ce que** le boîtier (2) se compose de deux demi-coquilles, en particulier symétriques.

5. Dispositif de nettoyage de phare (1) selon l'une des revendications précédentes, **caractérisé en ce que** le tuyau (3) est réalisé de manière symétrique dans les régions d'extrémité.

6. Dispositif de nettoyage de phare (1) selon l'une des revendications précédentes, **caractérisé en ce que** le boîtier (2) présente au moins une butée pour une position d'extrémité du gicleur (4), en particulier une butée (6) pour la position de repos et une butée (7) pour la position de travail du gicleur (4).

7. Dispositif de nettoyage de phare (1) selon l'une quelconque des revendications précédentes, **caractérisé en ce que** le tuyau (3) présente une vis sans fin (12) sur au moins une partie de sa longueur, laquelle est en prise avec une roue à denture hélicoïdale (11) pouvant être entraînée par le moteur électrique (8).

8. Dispositif de nettoyage de phare (1) selon l'une des revendications précédentes, **caractérisé en ce qu'**une soupape (15) fonctionnant en fonction de la pression est disposée dans la région de passage de l'écoulement du tuyau (3) ou du gicleur (4).

9. Dispositif de nettoyage de phare (1) selon l'une des revendications précédentes, **caractérisé en ce qu'**au moins la partie libre du tuyau (3) présente dans sa position de travail et/ou sa position de repos un recouvrement de protection, en particulier un soufflet (14).

10. Dispositif de nettoyage de phare (1) selon l'une des revendications précédentes, **caractérisé en ce que** le dispositif de réglage peut être sollicité avec de l'énergie dans la position de travail du gicleur (4) au moins temporairement.
